# EUROPEAN PATENT APPLICATION

(11) **EP 3 677 875 A1**
(43) Date of publication of application: **08.07.2020**
(21) Application number: 18852663.6
(22) Date of filing: 24.07.2018
(51) Int. Cl.: G01D 7/00, G01D 5/16, G01D 13/26

(54) **OUTPUT SYSTEM AND METER**

(30) Priority: 31.08.2017 JP 2017167012
(71) Applicant: UNIVERSITY PUBLIC CORPORATION OSAKA, Osaka-shi, Osaka 545-0051 (JP); Sirc Co., Ltd., Osaka-shi, Osaka 541-0056 (JP)
(72) Inventor: TSUJIMOTO, Hiroaki, Osaka-shi Osaka 545-0051 (JP); NAKATSUJI, Fumio, Osaka-shi Osaka 541-0056 (JP)
(74) Representative: Winter, Brandl, Fürniss, Hübner, Röss, Kaiser, Polte - Partnerschaft mbB
(86) International application number: PCT/JP2018/027705
(87) International publication number: WO 2019/044280

(57) **Abstract**

An output system according to one aspect of the present invention includes a magnet disposed on an axis of a pointer of a gauge, first and second magnetic sensors that are each configured to have a sensitivity axial direction, and an output unit configured to output indicated value information generated based on detection values of the magnetic sensors. Also, first and second directions are set to intersect each other on the axis of the pointer, and the first magnetic sensor is disposed such that the sensitivity axial direction thereof extends in the first direction, and the second magnetic sensor is disposed such that the sensitivity axial direction thereof extends in the second direction.

## Description

### Technical Field

The present invention relates to technology of an output system and a gauge.

### Background Art

Patent Literature 1 proposes a method for helping to maintain a gauge by attaching an IC tag unit to an existing gauge such as a pressure gauge, a thermometer, a flowmeter, a wattmeter, or the like. Specifically, an IC tag with which management information such as information regarding the gauge, calibration information, and inspection information can be read and written is attached into the gauge so as not to prevent visual recognition of the scale and the pointer. According to this disclosure, utilization of an RFID reader makes it possible to obtain management information of the gauges from the IC tags. Thus, the statuses of the gauges can be easily checked.

Also, Patent Literature 2 proposes a reading device for remotely reading an indicated value of a pointer. This reading device includes a magnet and a plurality of Hall elements. The magnet is disposed in a center portion of the pointer, and the plurality of Hall elements are disposed in a through-hole provided at the center of a cover to be adjacent to each other directly above the magnet. Accordingly, the reading device can specify a value indicated by the pointer (the angle of the pointer) based on the results obtained as a result of the Hall elements detecting the magnetic field of the magnet.

### Citation List

### Patent Literature

Patent Literature 1: WO 2015/174374
Patent Literature 2: JP 3161399U

### Summary of Invention

### Technical Problem

Although the RFID reader can read out the management information stored in the IC tag with the method proposed in Patent Literature 1, the value indicated by the pointer of the gauge (also referred to as an "indicated value" hereinafter) cannot be read out. Thus, it is necessary for an operator to check the indicated value of the gauge through visual observation.

In contrast, according to the method proposed in Patent Literature 2, it is possible to specify the indicated value of the gauge based on the results of detection performed by the Hall elements. That is, the indicated value of the gauge can be digitized through calculations of a measurement circuit connected to the Hall elements. Thus, it is possible to automate the reading of the indicated value of the gauge, and omit checking of the indicated values through an operator's visual observation.

However, with the reading device disclosed in Patent Literature 2, the Hall elements and the measurement circuit are housed in a tubular case, and the case is disposed in the through-hole provided at the center of the cover, as a result of which the Hall elements are disposed directly above the magnet. Thus, there has been an issue in that the existing cover to which the gauge is attached cannot directly be utilized, and the existing cover needs to be replaced with a special cover, resulting an increase in the cost of introducing the reading device.

One aspect of the present invention was made in view of such circumstances, and an object thereof is to provide technology capable of automating the reading of a value indicated by a pointer of an existing gauge at low cost.

### Solution to Problem

An output system according to one aspect of the present disclosure is an output system for outputting a value indicated by a pointer of a gauge that has an axis and is configured to rotate around the axis, and the output system includes a magnet disposed on the axis of the pointer, a first magnetic sensor and a second magnetic sensor that are each configured to have a sensitivity axial direction in which magnetic field detection sensitivity is at the maximum, and an output unit configured to output indicated value information relating to the value indicated by the pointer, the indicated value information being generated based on values that are respectively detected by the first magnetic sensor and the second magnetic sensor. Also, a first direction and a second direction are set to intersect each other on the axis of the pointer, the first magnetic sensor is disposed such that the sensitivity axial direction of the first magnetic sensor extends in the first direction, and the second magnetic sensor is disposed such that the sensitivity axial direction of the second magnetic sensor extends in the second direction.

In the output system according to this configuration, the magnet is disposed on the axis of the pointer, and the two magnetic sensors for detecting the magnetic field of the magnet are respectively disposed on lines extending in the first and second directions that intersect each other on the axis. The magnetic sensors are each configured to have a sensitivity axial direction in which magnetic field detection sensitivity is at the maximum. That is, if the magnetic field of the magnet extends in the sensitivity axial directions of the magnetic sensors, the response of each magnetic sensor to the magnetic field of the magnet is at the maximum (e.g., the absolute value of a detection value is the maximum). On the other hand, if the magnetic field of the magnet is orthogonal to the sensitivity axial direction of each magnetic sensor, the response of the magnetic sensor to the magnetic field of the magnet is at the minimum (e.g., a detection value is 0).

Thus, the values that are respectively detected by the first and second magnetic sensors indicate shift by the angle formed by the first and second directions, and a combination of the detection values of the magnetic sensors is uniquely determined in accordance with this shift. Thus, the angle of the pointer, or in other words, a value indicated by the pointer, can be specified based on the detection values of the magnetic sensors. Thus, according to this configuration, it is possible to automate the reading of values indicated by the pointer of the gauge as a result of the output unit being configured to output indicated value information generated based on the detection values of the magnetic sensors. Note that there is no particular limitation on the indicated value information as long as it is information relating to values indicated by the pointer, and the indicated value information may be the detection values of the magnetic sensors, or may be a value indicated by the pointer specified based on the detection values of the magnetic sensors.

Also, with this configuration, the magnetic sensors may be disposed at any positions as long as these sensors are located on lines that respectively extend in the first and second directions that intersect each other on the axis of the pointer. Thus, it is possible to relatively freely determine the arrangement of the magnetic sensors in an internal space of an existing gauge, such as on an inner surface of a cover or a dial, for example, without modifying the cover (a transparent plate) of the existing gauge. That is, it is possible to arrange the magnetic sensors for specifying values indicated by the pointer (the angle of the pointer) in the inner portion of the gauge without modifying the configuration of the existing gauge. Thus, the output system according to this configuration makes it possible to automate the reading of values indicated by the pointer of an existing gauge at a low cost.

In the output system according to the above-described one aspect, the first direction and the second direction may be set to be orthogonal to each other on the axis of the pointer. According to this configuration, it is possible to maximize the shift of the values that are respectively detected by the first and second magnetic sensors, and thus to increase accuracy at which a value indicated by the pointer is specified.

In the output system according to the above-described one aspect, the output unit may be configured to output the indicated value information to an external device through wireless communication. According to this configuration, it is possible to read values indicated by the pointer of the gauge utilizing wireless communication.

In the output system according to the above-described one aspect, the magnet may be formed into a circular shape. If the magnet is disposed on the axis of the pointer, there is a possibility that the rotation of the pointer will be inhibited by torque of the magnet, and the pointer cannot indicate an appropriate value. According to this configuration, as a result of forming the magnet into a circular shape, it is possible to reduce torque of the magnet generated by the rotation of the pointer, and thus to prevent the magnet disposed on the axis of the pointer from inhibiting the rotation of the pointer.

Also, a gauge according to one aspect of the present disclosure includes an axis, a dial that includes a scale provided in an arc shape around the axis, a pointer configured to rotate around the axis on the dial, a main body portion whose upper end portion is open and that includes an internal space and houses the dial and the pointer in the internal space in a state in which the scale faces the upper end portion side, a transparent cover for covering the upper end portion of the main body portion in a state in which the dial and the pointer are visually recognizable, and the output system according to any of the above-described modes. Also, the magnet is disposed on the axis of the pointer, the first magnetic sensor, the second magnetic sensor, and the output unit are attached near a center of a surface of the transparent cover on the internal space side in a state in which the scale of the dial is not concealed. According to this configuration, it is possible to automate the reading of values indicated by the pointer of an existing gauge at a low cost.

In the gauge according to the above-described one aspect, the output system may further include one or more substrates for disposing the first magnetic sensor, the second magnetic sensor, and the output unit, and the one or more substrates may each include a window portion for visually recognizing the magnet. According to this configuration, a user can attach the first magnetic sensor, the second magnetic sensor, and the output unit while checking the position of the magnet. Thus, it is possible to increase workability for attaching the output system.

### Advantageous Effects of Invention

According to the present invention, it is possible to provide technology for automating the reading of values indicated by a pointer of an existing gauge at a low cost.

### Brief Description of Drawings

FIG. 1 is a plan view showing one example of a gauge according to an embodiment.
FIG. 2 is a side view showing one example of the gauge according to the embodiment.
FIG. 3 is an exploded side view showing one example of the gauge according to the embodiment.
FIG. 4A shows one example of a first substrate according to an embodiment.
FIG. 4B shows one example of a second substrate according to an embodiment.
FIG. 5 shows one example of a magnetic sensor according to an embodiment.
FIG. 6 is a partial cross-sectional view showing one example of the gauge according to the embodiment.
FIG. 7 shows one example of a circuit configuration of the gauge according to the embodiment.
FIG. 8 shows the results of a simulation of an output system according to a working example.
FIG. 9 is a partial cross-sectional view showing one example of a gauge according to a variation.

### Description of Embodiments

Hereinafter, an embodiment (also referred to as "this embodiment" hereinafter) according to one aspect of the present invention will be described with reference to the drawings. However, this embodiment described hereinafter is merely an example of the present invention in all aspects, and does not limit the scope thereof. It will be appreciated that various improvements and modifications can be made without departing from the scope of the present invention. That is, a specific configuration corresponding to an embodiment may be adopted as appropriate to implement the present invention.

### §1 Configuration example

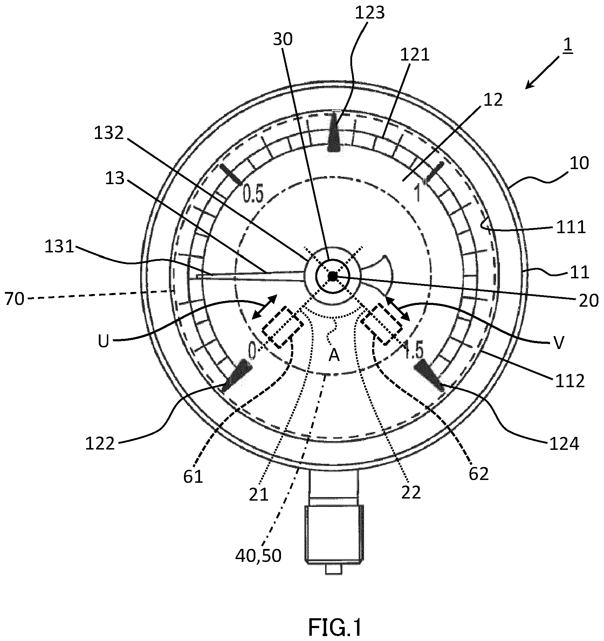

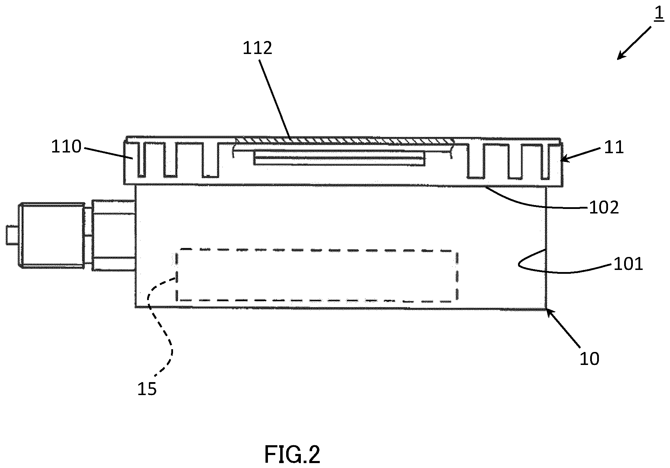

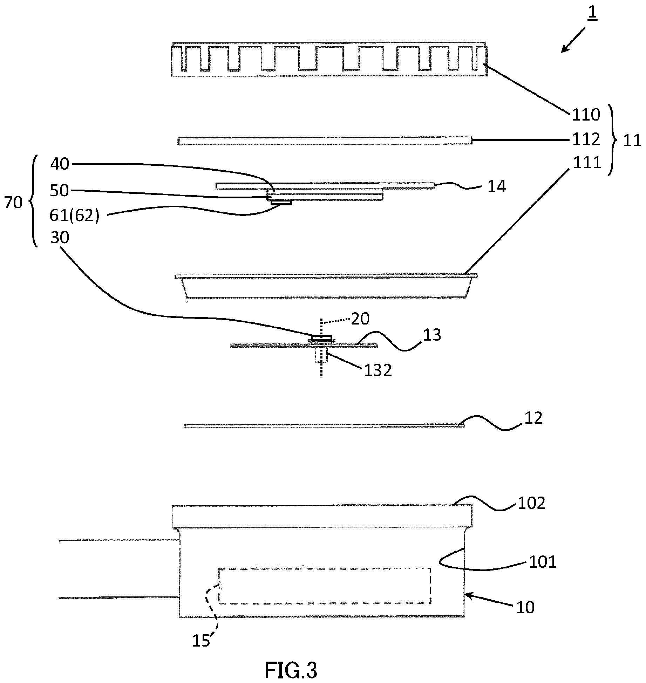

First, a configuration example of a gauge 1 according to this embodiment will be described with reference to FIGS. 1 to 3. FIGS. 1 to 3 are respectively a plan view, a side view, and an exploded side view that schematically show one example of the gauge 1 according to this embodiment. Note that a Bourdon tube pressure gauge is illustrated as an example of the gauge 1 according to this embodiment in the drawings. However, the type of gauge 1 is not limited to the Bourdon tube pressure gauge, and may be selected as appropriate in accordance with the embodiment as long as a gauge has a pointer that rotates around the axis thereof.

As shown in the drawings, the gauge 1 according to this embodiment includes a gauge main body that includes a main body portion 10, a transparent cover 11, a dial 12, and a pointer 13, and an output system 70 for outputting a value indicated by the pointer 13. Accordingly, the gauge 1 is configured to be capable of outputting the indicated value of the pointer 13, and thus it is possible to check the indicated value of the pointer 13 without depending on an operator's visual observation. Hereinafter, constituent elements thereof will be described.

### Gauge main body

First, the gauge main body will be described. The gauge main body according to this embodiment includes an axis 20, the main body portion 10, the transparent cover 11, the dial 12, and the pointer 13. The main body portion 10 is formed into a flat tubular shape extending along the axis 20, and accordingly is configured to have an internal space 101 for housing an internal mechanism 15 of the Bourdon tube.

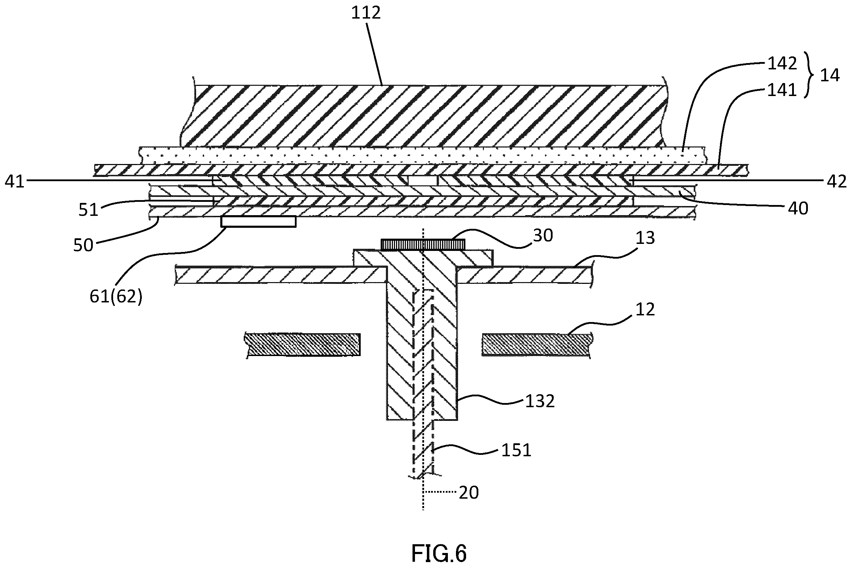

The internal mechanism 15 is similar to the internal mechanism of a known Bourdon tube pressure gauge, and is connected to a rotation axis 151 (see FIG. 6 that will be described later) . The rotation axis 151 coincides with the axis 20, and is configured to rotate in accordance with a pressure of a substance to be measured supplied to the internal mechanism 15. An upper end of the rotation axis 151 passes through the center of the dial 12, and is exposed on an upper surface of the dial 12.

The upper surface of the dial 12 is provided with a scale 121. The scale 121 is formed into an arc shape around the axis 20, and includes a first mark 122 indicating the minimum point, a second mark 123 indicating a midpoint, and a third mark 124 indicating the maximum point. Note that numerical values of the scale 121 may be determined as appropriate in accordance with the embodiment. In the example shown in FIG. 1, the first mark 122 corresponds to 0, the second mark 123 corresponds to 0.75, and the third mark 124 corresponds to 1.5, and the scale 121 indicates numerical values starting from 0 to 1.5 at intervals of 0.05.

The pointer 13 is linked to the upper end of the rotation axis 151 via a linking tool 132. Accordingly, the pointer 13 is configured to rotate around the axis 20 on the dial 12 in accordance with the pressure of the substance to be measured. The pointer 13 has a length such that a leading end portion 131 thereof is disposed on the scale 121, and rotates relative to the scale 121 and indicates the pressure of a substance to be measured. That is, the value of the scale 121 located directly below the leading end portion 131 is the value indicated by the pointer 13, and indicates the pressure of the substance to be measured.

Also, a bottom portion of the main body portion 10 is closed, whereas the upper end portion 102 is open. The transparent cover 11 is fitted into the upper end portion 102, and accordingly the internal space 101 is sealed. Specifically, the transparent cover 11 includes a cover main body 110, an inside cover 111, and a transparent plate 112. The cover main body 110 is formed into a tubular shape, and has an inner diameter that is slightly larger than an outer diameter of the main body portion 10. In contrast, the inside cover 111 is formed into a tapered tubular shape, and has an outer diameter that is almost the same or slightly smaller than the inner diameter of the main body portion 10. The upper end of the cover main body 110 is closed by the circular transparent plate 112, and the cover main body 110, the inside cover 111, and the transparent plate 112 are linked to each other as appropriate. As a result of the inside cover 111 being fitted into an inner wall of the main body portion 10 on the upper end portion 102 side, the transparent cover 11 is fixed to the upper end portion 102 of the main body portion 10.

The dial 12 and the pointer 13 are disposed upward of the internal mechanism 15 and downward of the transparent plate 112 of the transparent cover 11. The pointer 13 is disposed above the dial 12, and the dial 12 is disposed such that a surface thereof provided with the scale 121 serves as an upper surface. Accordingly, the dial 12 and the pointer 13 are housed in the internal space 101 in a state in which the scale 121 faces the upper end portion 102 side. Also, the transparent cover 11 covers the upper end portion 102 in a state in which the dial 12 and the pointer 13 can be visually recognized via the transparent plate 112.

Note that the material of the transparent plate 112 may be determined as appropriate in accordance with the embodiment as long as it is a transparent material. A glass plate, an acrylic plate, a polycarbonate plate, a hard synthetic resin sheet, or the like may be used as the transparent plate 112, for example. The material of the transparent plate 112 need not be a completely transparent material, and need only be transparent to the extent that the dial 12 and the pointer 13 disposed in the internal space 101 can be visually recognized.

Also, materials of the other constituent elements may be determined as appropriate in accordance with the embodiment. Here, a magnetic shielding material can be used as at least any of the materials of the cover main body 110, the inside cover 111, the main body portion 10, and the dial 12. Accordingly, it is possible to block the influence of geomagnetism on the magnetic sensors (61, 62), which will be described later. Note that the magnetic shielding material is a material capable of blocking magnetism, and examples of the magnetic shielding material include soft magnetic electroceramic materials containing iron oxide as the main component, such as soft ferrite, and polyester-based silver-copper conductive paint, in addition to iron, cobalt, nickel, silicon steel, supermalloy, permalloy, an amorphous magnetic material.

### Output system

Next, the output system 70 will be described. The output system 70 includes a magnetic 30, a first magnetic sensor 61, a second magnetic sensor 62, a first substrate 40, and a second substrate 50. The magnet 30 is disposed on the axis 20 of the pointer 13. The magnetic sensors (61, 62) are configured to detect the magnetic field of the magnet 30, and the substrates (40, 50) are configured to output the values output from the magnetic sensors (61, 62) to an external device (e.g., a reader/writer 90, which will be described later). Accordingly, the output system 70 is configured to be capable of outputting the detection values of the magnetic sensors (61, 62) that can be utilized to specify a value indicated by the pointer 13, specifically, the indicated value. Hereinafter, constituent elements thereof will be described.

### Magnet

First, the magnet 30 will be described. The magnet 30 is a permanent magnet, for example. As shown in FIG. 1, the magnet 30 according to this embodiment is formed into a circular shape such that torque that adversely affects the rotation of the pointer 13 is not generated. Also, the magnet 30 according to this embodiment is fixed onto the axis 20 of the pointer 13 with the center of the magnet 30 and the axis 20 coinciding with each other. Thus, the orientation of the magnet 30 changes in accordance with the rotation of the pointer 13, and the state of the magnetic field generated from the magnet 30 changes in accordance with a change in the orientation of the magnet 30. The orientation of the magnet 30 is determined according to the angle of the pointer 13, that is, the value indicate by the pointer 13, and accordingly, the state of the magnetic field generated from the magnet 30 is determined.

Note that when the magnet 30 is fixed on the pointer 13, the orientation of the magnet 30 with respect to the pointer 13 may be determined as appropriate in accordance with the embodiment. The leading end portion and the rear end portion of the pointer 13 may be respectively associated with the N-pole and the S-pole of the magnet 30, for example. At this time, the N-pole of the magnet 30 may be oriented on the leading end portion 131 side of the pointer 13, or the S-pole of the magnet 30 may be oriented on the leading end portion 131 side of the pointer 13.

### First substrate and second substrate

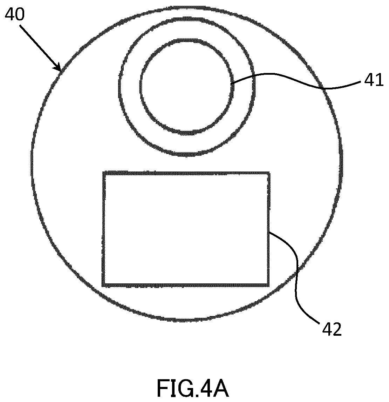

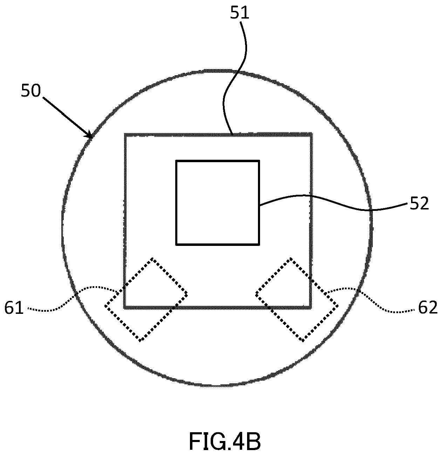

Next, the first substrate 40 and the second substrate 50 will be described the with reference to FIGS. 4A and 4B. FIG. 4A shows one example of the first substrate 40 according to this embodiment. FIG. 4B shows one example of the second substrate 50 according to this embodiment.

As shown in FIG. 4A, a circuit that includes a battery 41 and an output unit 42 is formed on the first substrate 40. The output unit 42 is disposed on the first substrate 40, and is configured as appropriate to output indicated value information that is generated based on the detection values of the magnetic sensors (61, 62) and relates to the value indicated by the pointer 13. The first substrate 40 according to this embodiment is formed into a circular shape, and the diameter of the first substrate 40 is smaller than the length of the pointer 13 and the inner diameter of the scale 121.

On the other hand, as shown in FIG. 4B, a circuit 51 that includes an MPU (microprocessor unit) 52 is formed on the second substrate 50. The magnetic sensors (61, 62) are connected to the circuit 51 of the second substrate 50. Similarly to the first substrate 40, the second substrate 50 according to this embodiment is formed into a circular shape, and the diameter of the second substrate 50 is smaller than the length of the pointer 13 and the inner diameter of the scale 121.

The circuit configurations of the substrates (40, 50) will be described in detail later. Note that there is no particular limitation on the indicated value information as long as it is information relating to values indicated by the pointer 13, and the indicated value information may be the detection values of the magnetic sensors (61, 62), or may be the value indicated by the pointer 13 specified based on the detection values of the magnetic sensors (61, 62).

### Magnetic sensors

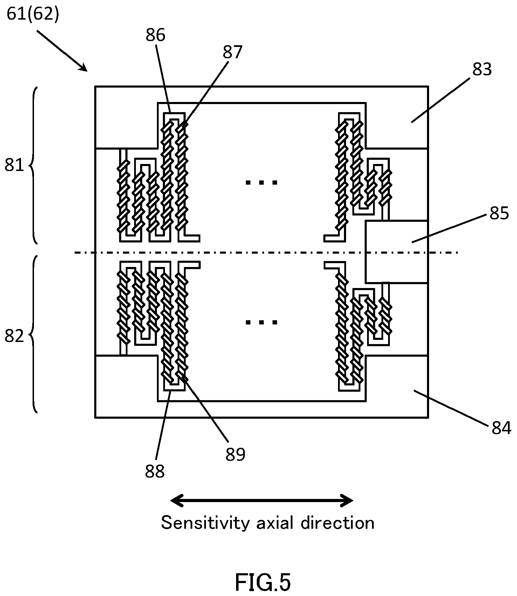

Next, the magnetic sensors (61, 62) will be described with reference to FIG. 5. FIG. 5 schematically shows one example of the configuration of the magnetic sensors (61, 62) according to this embodiment. There is no particular limitation on the configurations of the magnetic sensors (61, 62) as long as the magnetic sensors are each configured to have a sensitivity axial direction in which magnetic field detection sensitivity is at the maximum. A known sensor can be utilized as the magnetic sensors (61, 62). A measurement device that is disclosed in Japanese Patent 5885209 and in which a magnetoresistance effect is used can be utilized as the magnetic sensors (61, 62).

In this embodiment, the magnetic sensors (61, 62) are formed into a rectangular shape, and are each divided into two portions, namely, a first portion 81 and a second portion 82. A first electrode 83 is formed in the first portion 81 to occupy a first end side (an upper side in FIG. 5) that is located opposite the second portion 82. Similarly, a second electrode 84 is formed in the second portion 82 to occupy a second end side (a lower side in FIG. 5) that is located opposite the first portion 81.

Also, a rectangular third electrode 85 is formed at one third end side (the right side in FIG. 5) out of the two end sides that are orthogonal to the first and second end sides provided with the first electrode 83 and the second electrode 84, to span the boundary between the first portion 81 and the second portion 82. Accordingly, the third electrode 85 is utilized in both the first portion 81 and the second portion 82. Note that aluminum, copper, and the like can be used as the materials of the electrodes 83 to 85, for example.

A sensor line 86 formed using a magnetic material is formed in the first portion 81 between the first electrode 83 and the third electrode 85. The sensor line 86 is linked to the first electrode 83 on a fourth end side (the left side in FIG. 5) that is located opposite the end side provided with the third electrode 85, extends while folding back in a direction facing the first and second end sides and a direction facing the third and fourth end sides, and is linked to the third electrode 85. A plurality of conductive films 87 extending in a direction inclined from the direction facing the first and second end sides are laminated on the sensor line 86 apart from each other similar to the design of a barber's pole.

Similarly, a sensor line 88 formed using a magnetic material is formed in the second portion 82 between the second electrode 84 and the third electrode 85. The sensor line 88 is linked to the second electrode 84 on the fourth end side, extends while folding back in a direction facing the first and second end sides and a direction facing the third and fourth end sides, and is linked to the third electrode 85. A plurality of conductive films 89 extending in a direction inclined from the direction facing the first and second end sides are laminated on the sensor line 88 apart from each other similar to the design of a barber's pole.

However, the shape of the sensor line 88 of the second portion 82 and the shape of the sensor line 86 of the first portion 81 are line symmetrical with each other with respect to the boundary between the first portion 81 and the second portion 82. Also, the orientation of the conductive films 89 of the second portion 82 is opposite to the orientation of the conductive films 87 of the first portion 81. Accordingly, the configuration of the second portion 82 and the configuration of the first portion 81 have a line symmetric relationship.

The magnetic sensors (61, 62) according to this embodiment are configured to have a sensitivity axial direction (a horizontal direction in FIG. 5) in which the magnetic field detection sensitivity is at the maximum due to a magnetoresistance effect on the sensor lines (86, 88) and the conductive films (87, 89) as described above. Note that permalloy (NiFe) or the like can be used as a magnetic material of the sensor lines (86, 88), for example. Also, copper (Cu), and the like can be used as the materials of the conductive films (87, 89), for example.

### Arrangement

Next, the arrangement of the substrates (40, 50) and the magnetic sensors (61, 62) will be described, further using FIG. 6. FIG. 6 is a partial cross-sectional view showing one example of the gauge 1 according to this embodiment. As described above, in this embodiment, the pointer 13 is linked to the upper end of the rotation axis 151 of the internal mechanism 15 via the linking tool 132, and the magnet 30 is fixed onto the axis 20 of the pointer 13. Accordingly, the magnet 30 rotates around the axis 20 in accordance with the rotation of the pointer 13.

On the other hand, the substrates (40, 50) that include the output unit 42 and the magnetic sensors (61, 62) are attached near the center of a surface of the transparent plate 112 of the transparent cover 11 on the internal space 101 side, via an adhesive sheet 14.

Specifically, as shown in FIG. 6, the surface (upper surface) provided with the battery 41 and the output unit 42 of the first substrate 40 is adhered to the surface of the transparent plate 112 on the internal space 101 side via the adhesive sheet 14. The surface (the upper surface) provided with the circuit 51 of the second substrate 50 is adhered to the opposing surface (the lower surface) of the first substrate 40. Also, the magnetic sensors (61, 62) are adhered to the opposing surface (the lower surface) of the second substrate 50. The substrates (40, 50) may be adhered to each other, and the second substrate 50 and the magnetic sensors (61, 62) may be adhered to each other as appropriate in accordance with the embodiment.

The size of the magnetic sensors (61, 62) is smaller than that of the substrates (40, 50) in this embodiment. Also, the diameter of the substrates (40, 50) is smaller than the length of the pointer 13 and the inner diameter of the scale 121. Thus, even if the substrates (40, 50) and the magnetic sensors (61, 62) are attached near the center of the surface of the transparent plate 112, the visibility of the leading end portion 131 of the pointer 13 and the scale 121 is not impaired. That is, the substrates (40, 50) and the magnetic sensors (61, 62) can be attached near the center of the surface of the transparent plate 112 in a state in which the leading end portion 131 of the pointer 13 and the scale 121 are not concealed.

Note that the adhesive sheet 14 includes a base member 141 and an adhesive layer 142. The size of the base member 141 and the size of the adhesive layer 142 in a plan view may be determined as appropriate in accordance with the embodiment as long as the substrates (40, 50) and the magnetic sensors (61, 62) can be attached to the surface of the transparent plate 112 on the internal space 101 side. If the base member 141 and the adhesive layer 142 are transparent, for example, the size of the base member 141 and the size of the adhesive layer 142 in a plan view may be larger than that of the substrates (40, 50) .

A deformable synthetic resin, a hard synthetic resin, glass, or the like can be used as a material of the base member 141. Specifically, a biaxially oriented nylon film, a biaxially oriented polypropylene film, a biaxially oriented polyester-based resin film, and a stacked film thereof may be used as the base member 141. An acrylic adhesive, an adhesive containing an acrylic polymer and a crosslinking agent, or the like can be used as the material of the adhesive layer 142. As a result of attaching the base member 141 to the transparent plate 112 via the adhesive layer 142, it is possible to increase the strength of the transparent plate 112, and prevent cracking, scattering, and the like of the transparent plate 112.

Also, as shown in FIG. 1, the magnetic sensors (61, 62) are disposed at positions deviated from the axis 20 in a plan view in this embodiment. Specifically, in a plan view, the first direction 21 and the second direction 22 are set to intersect each other on the axis 20 of the pointer 13. Also, the first magnetic sensor 61 is disposed such that a sensitivity axial direction U of the first magnetic sensor 61 extends in the first direction 21. The second magnetic sensor 62 is disposed such that a sensitivity axial direction V of the second magnetic sensor 62 extends in the second direction 22.

That is, in a plan view, the first magnetic sensor 61 is disposed on the line of the first direction 21 in a state in which the sensitivity axial direction U extends in the first direction 21, and the second magnetic sensor 62 is disposed on the line of the second direction 22 in a state in which the sensitivity axial direction V extends in the second direction. The state in which the sensitivity axial direction extends in the first or second direction includes a state in which the sensitivity axial direction is slightly deviated from the first or second direction to the extent that the magnetic sensors (61, 62) can detect the magnetic field of the magnet 30, in addition to a state in which the sensitivity axial direction completely coincides with the first or second direction.

Accordingly, detection values obtained as a result of the magnetic sensors (61, 62) detecting the magnetic field of the magnet 30 that rotates around the axis 20 in accordance with the rotation of the pointer 13 indicate shift by an angle A formed between the first direction 21 and the second direction 22. Thus, a combination of the detection values of the magnetic sensors (61, 62) is uniquely determined in accordance with this shift. Thus, the orientation of the pointer 13, or in other words, a value indicated by the pointer 13, can be specified based on the detection values of the magnetic sensors (61, 62) .

Preferably, the first direction 21 and the second direction 22 are set to be orthogonal to each other on the axis 20 of the pointer 13. That is, the angle A formed between the first direction 21 and the second direction 22 is set to 90 degrees. Note that although the first magnetic sensor 61 and the second magnetic sensor 62 are respectively disposed near the first mark 122 and the third mark 124 in the example shown in FIG. 1, the arrangement of the magnetic sensors (61, 62) need not be limited to such an example, and may be determined as appropriate in accordance with the embodiment.

### Circuit configuration

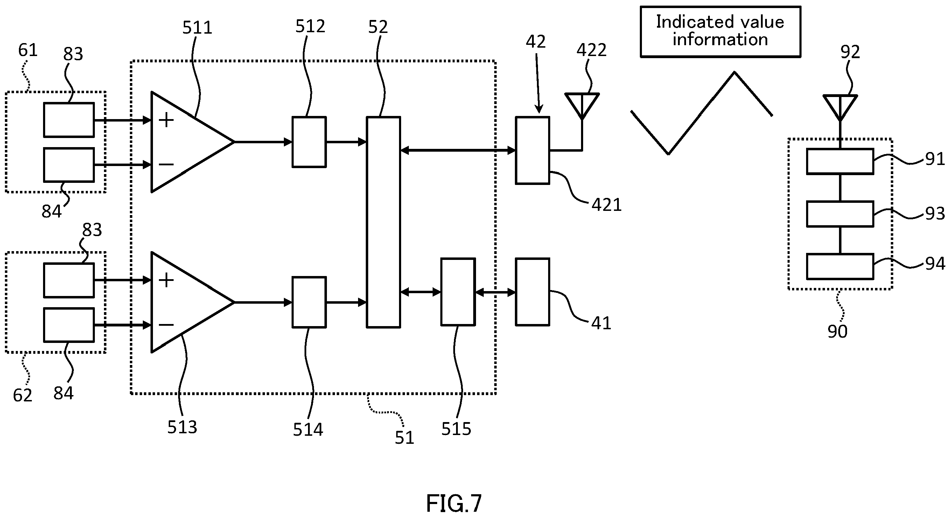

Next, the circuit configuration of the substrates (40, 50) will be described with reference to FIG. 7. FIG. 7 schematically shows one example of an electronic circuit constituted by the substrates (40, 50). As shown in FIG. 7, the circuit 51 of the second substrate 50 includes a pair of operational amplifiers (511, 513), a pair of A (analog)/D (digital) converters (512, 514), an MPU 52, and a storage unit 53.

In this embodiment, the first electrode 83 of the first magnetic sensor 61 is connected to a non-inverting input terminal of the first operational amplifier 511, and the second electrode 84 of the first magnetic sensor 61 is connected to an inverting input terminal of the first operational amplifier 511. Similarly, the first electrode 83 of the second magnetic sensor 62 is connected to a non-inverting input terminal of the second operational amplifier 513, and the second electrode 84 of the second magnetic sensor 62 is connected to an inverting input terminal of the second operational amplifier 513.

However, a connection relationship between the magnetic sensors (61, 62) and the operational amplifiers (511, 513) need not be limited to such an example. The first electrodes 83 of the magnetic sensors (61, 62) may be connected to the inverting input terminals of the operational amplifiers (511, 513), and the second electrodes 84 of the magnetic sensors (61, 62) may be connected to the non-inverting input terminals of the operational amplifiers (511, 513), for example. Note that the third electrodes 85 of the magnetic sensors (61, 62) are connected to the ground of the circuit.

Accordingly, the operational amplifiers (511, 513) output signals corresponding to potential differences between the first electrodes 83 and the second electrodes 84 of the magnetic sensors (61, 62), or in other words, the detection values of the magnetic sensors (61, 62). As described above, the potential difference between the first electrode 83 and the second electrode 84 of the magnetic sensors (61, 62) is determined by the orientation of the magnet 30 disposed on the axis 20 of the pointer 13. Thus, the outputs of the operational amplifiers (511, 513) change in accordance with a change in the magnetic field of the magnet 30 following the rotation of the pointer 13.

Specifically, when the magnetic field of the magnet 30 extends in the sensitivity axial direction U of the first magnetic sensor 61, the potential difference between the first electrode 83 and the second electrode 84 of the first magnetic sensor 61 is the largest, and accordingly, the output of the first operational amplifier 511 is the largest. On the other hand, when the magnetic field of the magnet 30 is orthogonal to the sensitivity axial direction U of the first magnetic sensor 61, the potential difference between the first electrode 83 and the second electrode 84 of the first magnetic sensor 61 is the smallest, and accordingly, the output of the first operational amplifier 511 is the smallest (typically, 0). The same applies to the operations of the second magnetic sensor 62 and the second operational amplifier 513.

The first operational amplifier 511 is connected to the MPU 52 via the first A/D converter 512. Similarly, the second operational amplifier 513 is connected to the MPU 52 via the second A/D converter 514. Accordingly, the signals output from the operational amplifiers (511, 513) are converted into digital signals by the A/D converters (512, 514), and are input to the MPU 52.

The MPU 52 receives detection values of the magnetic sensors (61, 62), and generates indicated value information relating to a value indicated by the pointer 13 based on the received detection values of the magnetic sensors (61, 62). As described above, the state of the magnetic field of the magnet 30 is determined in accordance with the angle of the pointer 13, and a combination of the detection values of the magnetic sensors (61, 62) is uniquely determined in accordance with the state of the magnetic field of the magnet 30.

In view of this, the MPU 52 may directly utilize the combination of the detection values of the magnetic sensors (61, 62) as indicated value information. In this case, an external device that has received the indicated value information references correspondence relation data that is stored in a storage device or the like of the external device and indicates a correspondence relation between the combinations of the detection values of the magnetic sensors (61, 62) and the indicated values of the pointer 13, and specifies the value indicated by the pointer 13.

Also, the MPU 52 may directly calculate the value indicated by the pointer 13 based on the combination of the detection values of the magnetic sensors (61, 62), and set the calculated value indicated by the pointer 13 as indicated value information. In this case, correspondence relation data indicating a correspondence relation between the combinations of the detection values of the magnetic sensors (61, 62) and the indicated values of the pointer 13 may be stored in the storage unit 53.

The storage unit 53 is constituted by a RAM (Random Access Memory), a ROM (Read Only Memory), or the like, for example, and stores various information such as programs to be executed by the MPU 52. The MPU 52 may read out correspondence relation data from the storage unit 53, references the readout correspondence relation data, and thus calculates a value indicated by the pointer 13 from the combination of the detection values of the magnetic sensors (61, 62).

Here, the MPU 52 may store the generated indicated value information in the storage unit 53 together with the time at which the indicated value information is generated. Accordingly, the value indicated by the pointer 13, that is, the history of the results of measurements performed by the gauge 1, can be generated. In addition to these values, information regarding the identifier, model, calibration deadline, last inspection date, scheduled inspection date, examinator's name, time stamp, and the like of the gauge 1 may be stored in the storage unit 53. Note that the storage unit 53 is connected to the battery 41 of the first substrate 40, and continues to retain various information as long as the storage unit 53 receives the supply of power from the battery 41.

The MPU 52 outputs the indicated value information to an external device (the reader/writer 90 in FIG. 7) utilizing the output unit 42 of the first substrate 40. The output unit 42 may be configured as appropriate to output indicated value information to an external device. The output unit 42 includes a communication module 421 and an antenna 422 in this embodiment. The communication module 421 is a known wireless communication module, for example. Accordingly, the output unit 42 may be configured to output indicated value information to an external device through wireless communication.

Types of external device to which indicated value information is to be output may be selected as appropriate in accordance with the embodiment. The external device may be a general-purpose desktop PC (Personal Computer), a tablet PC, a smartphone, or the like, for example. The reader/writer 90 is shown in FIG. 7 as an example of the external device.

The reader/writer 90 according to this embodiment includes a communication module 91, an antenna 92, a controller 93, and a touch panel display 94. The communication module 91 is a known wireless communication module, for example. The controller 93 is constituted by a CPU (central processing unit), a RAM, and a ROM, for example. Accordingly, the reader/writer 90 is configured to be capable of receiving and transmitting data from/to the gauge 1 through wireless communication.

An operator brings the reader/writer 90 in a range in which the reader/writer 90 can perform wireless communication with the gauge 1, and operates the touch panel display 94 to transmit an indicated value information acquisition request from the reader/writer 90 to the gauge 1. The MPU 52 of the gauge 1 receives the request via the output unit 42, and transmits indicated value information in accordance with the received request.

Specifically, the MPU 52 may generate indicated value information based on the detection values acquired from the magnetic sensors (61, 62) at a point of time when the MPU 52 receives the request, and transmit the generated indicated value information to the reader/writer 90 via the output unit 42. Also, the MPU 52 may read out, from the storage unit 53, indicated value information that has not been transmitted, and transmit the readout indicated value information to the reader/writer 90 via the output unit 42.

At this time, various information stored in the storage unit 53 may be updated as appropriate. The data on which this reading has been performed is stored in the storage unit 53 as the last inspection date, for example. Also, the name of the operator may be stored in the RAM or the ROM of the reader/writer 90, and the name of the operator stored in the reader/writer 90 that has performed this reading may be stored in the storage unit 53 as the examinator's name.

When the reader/writer 90 receives indicated value information from the gauge 1, the reader/writer 90 displays, on the touch panel display 94, the value indicated by the pointer 13 indicated by the indicated value information. Specifically, if indicated value information is constituted by detection values of the magnetic sensors (61, 62), as described above, the controller 93 of the reader/writer 90 specifies the value indicated by the pointer 13 based on the detection values of the magnetic sensors (61, 62). Also, the controller 93 displays the specified value indicated by the pointer 13 on the touch panel display 94. On the other hand, if indicated value information is constituted by the value indicated by the pointer 13, the controller 93 directly displays the indicated value information on the touch panel display 94.

The operator can check the value indicated by the pointer 13 by looking at the display of the touch panel display 94. Thus, as a result of utilizing the gauge 1 and the output system 70 according to this embodiment, it is possible to omit the operation for visually observing the value of the scale 121 indicated by the pointer 13, from the operations for checking the value measured by the gauge 1.

However, the operation for visually observing the value of the scale 121 indicated by the pointer 13 need not be omitted. If whether or not the value that is indicated by the pointer 13 and is displayed on the touch panel display 94 is correct is checked, the operator may read the value indicated by the pointer 13 using the reader/writer 90, and then check the value of the scale 121 indicated by the pointer 13 through visual observation.

### Characteristics

As described above, the output system 70 according to this embodiment makes it possible to automate the reading of values indicated by the pointer 13 of the gauge 1. Also, the magnet 30 is disposed on the axis 20 of the pointer 13, whereas the magnetic sensors (61, 62) are disposed on lines that respectively extend in the first direction 21 and the second direction 22 that intersect each other on the axis 20. Thus, in the above-described embodiment, as the magnetic sensors (61, 62) being attached to the back surface of the transparent plate 112, the arrangement of the magnetic sensors (61, 62) can be relatively freely determined. In particular, it is possible to arrange the magnetic sensors (61, 62) in the internal space 101 without performing special processing on the gauge main body such as the main body portion 10 and the transparent cover 11. Thus, the output system 70 can be directly used without modifying an existing gauge. Thus, according to this embodiment, it is possible to automate the reading of values indicated by a pointer of an existing gauge at a low cost.

### §2 Variations

Although an embodiment of the present invention has been described as described above, the above description is merely an example of the present invention in all aspects. It will be appreciated that various improvements and modifications can be made without departing from the scope of the present invention. Constituent elements may be omitted from, substituted, and added to the constituent elements of the above-described gauge 1 as appropriate in accordance with the embodiment, for example. Also, the shape and size of each constituent element of the above-described gauge 1 may be determined as appropriate in accordance with the embodiment. Specifically, the following changes are possible. Note that with regard to constituent elements similar to those of the above-described embodiment, similar reference signs are used below, and with regard to aspects similar to those of the above-described embodiment, description thereof is omitted as appropriate. The following variations can be combined as appropriate.

A gauge 1 is a Bourdon tube pressure gauge in the above-described embodiment. However, the type of gauge 1 is not limited to the pressure gauge, and may be selected as appropriate in accordance with the embodiment. The type of gauge 1 may be a thermometer, a flowmeter, a wattmeter, or the like, for example. Also, the gauge 1 is not limited to a Bourdon tube, and may be selected as appropriate in accordance with the embodiment as long as a measurement value is indicated by a pointer.

Also, the substrates (40, 50) and the magnetic sensors (61, 62) are attached to the transparent plate 112 of the transparent cover 11 in the above-described embodiment. However, the arrangement of the substrates (40, 50) and the magnetic sensors (61, 62) is not limited to such an example. The substrates (40, 50) and the magnetic sensors (61, 62) may be disposed on the dial 12, for example.

Also, the output unit 42 is configured to output data through wireless communication in the above-described embodiment. However, the configuration of the output unit 42 is not limited to such an example. The output unit 42 may be configured to output data through wired communication.

Also, the substrates (40, 50) and the magnetic sensors (61, 62) are attached to a surface of the transparent plate 112 on the internal space 101 side as they are in the above-described embodiment. However, the states of the substrates (40, 50) and the magnetic sensors (61, 62) are not limited to such an example. The substrates (40, 50) and the magnetic sensors (61, 62) may be covered with a waterproof sheet member, for example. Accordingly, it is possible to prevent the substrates (40, 50) and the magnetic sensors (61 62) from being damaged by water.

Also, the battery 41 and the output unit 42 are disposed on the first substrate 40, and the magnetic sensors (61, 62) are disposed on the second substrate 50 in the above-described embodiment. However, the relationship between the constituent elements and the substrates are not limited to such an example. Also, the number of substrates for disposing the constituent elements may be determined as appropriate in accordance with the embodiment. The number of substrates for disposing the constituent elements may be one, or three or more. The battery 41, the output unit 42, and the magnetic sensors (61, 62) may be disposed on the same substrate, for example. Also, the battery 41, the output unit 42, and the magnetic sensors (61, 62) may be disposed on different substrates, for example. Also, similarly to the above-described embodiment, the substrates may be stacked on each other in the vertical direction, or may be disposed on the same plane.

Also, the magnet 30 is disposed on the axis of the pointer 13, and the substrates (40, 50) are disposed above the magnet 30 in the above-described embodiment. Thus, there is a possibility that a user cannot visually recognize the magnet 30 in a state in which the substrates (40, 50) are attached to the transparent cover 11.

In order to prevent this, the substrates (40, 50) disposed above the magnet 30 may be constituted by a transparent material. Also, the constituent elements such as the battery 41, the output unit 42, the circuit 51, and the magnetic sensors (61, 62) that are disposed on the substrates (40, 50) may be disposed avoiding a region located above the magnet 30.

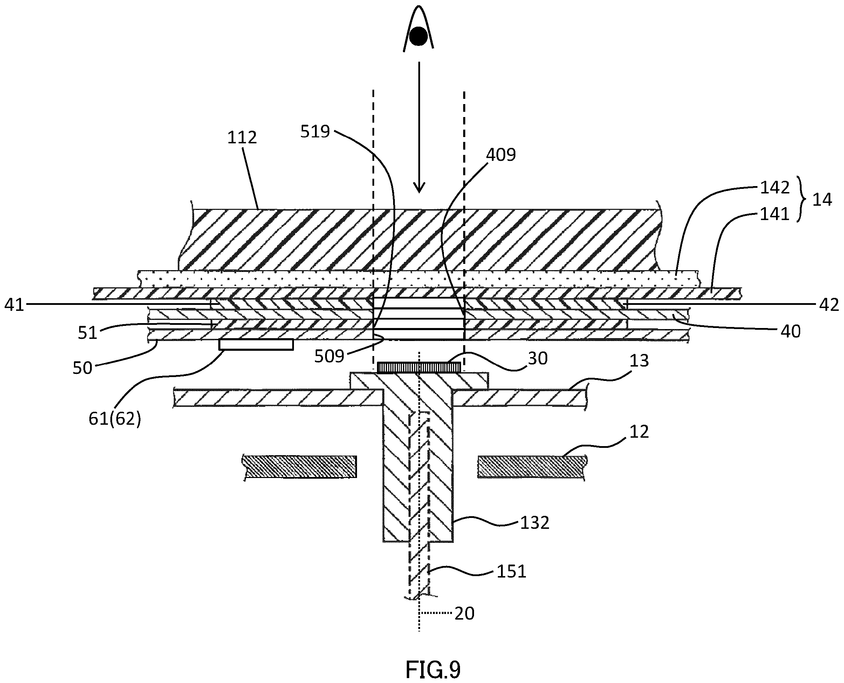

In addition, as illustrated in FIG. 9, the substrates (40, 50) may respectively have window portions (409, 509) for visually recognizing the magnet 30. FIG. 9 is a partial cross-sectional view showing one example of a gauge according to this variation. In this variation, the substrates (40, 50) and the circuit 51 have the window portions (409, 509, 519), and the battery 41, the output unit 42, and the magnetic sensors (61, 62) are disposed avoiding a region located above the magnet 30. The window portions (409, 509, 519) may be configured as openings, or may be constituted by a see-through material.

Accordingly, the user can attach the output unit 42 and the magnetic sensors (61, 62) to the transparent cover 11 via the substrates (40, 50) while checking the position of the magnet 30. Thus, it is possible to increase workability for attaching the output system 70 disposed such that the sensitivity axial directions of the magnetic sensors (61, 62) respectively extend in the first direction and the second direction.

### §3 Working Example

Hereinafter, a working example of the present invention will be described. However, the present invention is not limited to this working example.

A simulation model of a gauge having a configuration that is almost the same as that of the above-described embodiment was produced, and a simulation in which a magnetic field of a magnet is detected by magnetic sensors was performed utilizing electromagnetic field analysis software (ANSYS Maxwell) . Note that parameters of the constituents are as follows.

### Parameters

- Size of magnet: width 3 mm × length 6 mm × thickness 1 mm
- Orientation of magnet: N-pole was oriented on leading end side of pointer, and S-pole was oriented on rear end side thereof
- Angle of first direction: -135 degrees (where upper direction extending from axis is 0 degrees in FIG. 1)
- Distance from axis to first magnetic sensor: 10 mm
- Angle of second direction: 135 degrees (where upper direction extending from axis is 0 degrees in FIG. 1)
- Distance from axis to second magnetic sensor: 10 mm

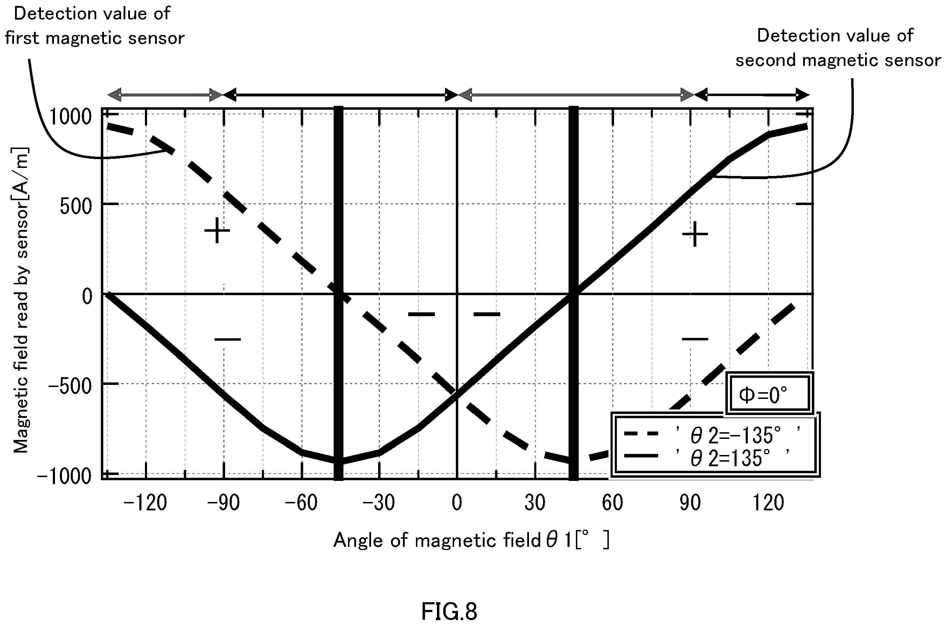

FIG. 8 shows the results of this simulation. As shown in FIG. 8, it was found that the combinations of the detection values of the first magnetic sensor and the second magnetic sensor were uniquely determined in accordance with the orientation of the pointer, that is, the value indicated by the pointer. Thus, it was found that the value indicated by the pointer can be specified based on the combinations of the detection values of the first magnetic sensor and the second magnetic sensor. Also, it was found that if the angle formed between the first direction and the second direction was 90 degrees, the detection values of the first magnetic sensor and the second magnetic sensor shifted by 90 degrees, and it was possible to favorably specify the value indicated by the pointer.

### List of Reference Numerals

- 1: Gauge
- 10: Main body portion
- 101: Internal space
- 102: Upper end portion
- 11: Transparent cover
- 110: Cover main body
- 111: Inside cover
- 112: Transparent plate
- 12: Dial
- 121: Scale
- 13: Pointer
- 131: Leading end portion
- 132: Linking tool
- 14: Adhesive sheet
- 141: Base member
- 142: Adhesive layer
- 15: Internal mechanism
- 20: Axis
- 21: First direction
- 22: Second direction
- 30: Magnet
- 40: First substrate
- 41: Battery
- 42: Output unit
- 50: Second substrate
- 51: Circuit
- 511: First operational amplifier
- 512: First A/D converter
- 513: Second operational amplifier
- 514: Second A/D converter
- 52: MPU
- 53: Storage unit
- 61: First magnetic sensor
- 62: Second magnetic sensor
- 70: Output system
- 81: First portion
- 82: Second portion
- 83: First electrode
- 84: Second electrode
- 85: Third electrode
- 86: Sensor line
- 87: Conductive film
- 88: Sensor line
- 89: Conductive film
- 90: Reader/writer
- 91: Communication module
- 92: Antenna
- 93: Controller
- 94: Touch panel display

## Claims

1. An output system for outputting a value indicated by a pointer of a gauge that has an axis and is configured to rotate around the axis, the output system comprising:
a magnet disposed on the axis of the pointer;
a first magnetic sensor and a second magnetic sensor that are each configured to have a sensitivity axial direction in which magnetic field detection sensitivity is at the maximum; and
an output unit configured to output indicated value information relating to the value indicated by the pointer, the indicated value information being generated based on values that are respectively detected by the first magnetic sensor and the second magnetic sensor,
wherein a first direction and a second direction are set to intersect each other on the axis of the pointer,
the first magnetic sensor is disposed such that the sensitivity axial direction of the first magnetic sensor extends in the first direction, and
the second magnetic sensor is disposed such that the sensitivity axial direction of the second magnetic sensor extends in the second direction.

2. The output system according to claim 1,
wherein the first direction and the second direction are set to be orthogonal to each other on the axis of the pointer.

3. The output system according to claim 1 or 2,
wherein the output unit is configured to output the indicated value information to an external device through wireless communication.

4. The output system according to any one of claims 1 to 3, wherein the magnet is formed into a circular shape.

5. A gauge comprising:
an axis;
a dial that includes a scale provided in an arc shape around the axis;
a pointer configured to rotate around the axis on the dial;
a main body portion whose upper end portion is open and that includes an internal space and houses the dial and the pointer in the internal space in a state in which the scale faces the upper end portion side;
a transparent cover for covering the upper end portion of the main body portion in a state in which the dial and the pointer are visually recognizable; and
the output system according to any one of claims 1 to 4,
wherein the magnet is disposed on the axis of the pointer, and
the first magnetic sensor, the second magnetic sensor, and the output unit are attached near a center of a surface of the transparent cover on the internal space side in a state in which the scale of the dial is not concealed.

6. The gauge according to claim 5,
wherein the output system further includes one or more substrates for disposing the first magnetic sensor, the second magnetic sensor, and the output unit, and
the one or more substrates each include a window portion for visually recognizing the magnet.
